# EUROPÄISCHE PATENTSCHRIFT

(11) **EP 2 774 573 B1**
(45) Veröffentlichungstag und Bekanntmachung des Hinweises auf die Patenterteilung: **03.05.2017**
(21) Anmeldenummer: 13157522.7
(22) Anmeldetag: 04.03.2013
(51) Int. Cl.: A61C 1/18, A61C 1/12

(54) **Medizinisches, insbesondere dentales, Winkelstück**
Medical, in particular dental, contra-angle handpiece
Contre-angle médical, en particulier dentaire

(43) Veröffentlichungstag der Anmeldung: 10.09.2014
(60) Teilanmeldung: 17151590.1
(73) Patentinhaber: W & H Dentalwerk Bürmoos GmbH, 5111 Bürmoos (AT)
(72) Erfinder: Helfenbein, Gerald, 5133 Gilgenberg (AT); Schatz, Norbert, 5111 Bürmoos (AT); Spitzauer, Josef, 5110 Loipferding (AT)
(74) Vertreter: Benda, Ralf

(56) Entgegenhaltungen:
- EP-A1- 0 029 863
- EP-A2- 1 709 933
- DE-A1-102011 075 670

## Beschreibung

Die vorliegende Erfindung betrifft ein medizinisches, insbesondere dentales, Winkelstück mit einer einteiligen, hohlen Griffhülse mit einem ersten Hülsenabschnitt und einem zweiten Hülsenabschnitt, die gebogen oder gewinkelt zueinander angeordnet sind und mit einem Antriebsstrang zum in Bewegung Versetzen einer Werkzeughalterung mit einer im Wesentlichen im ersten Hülsenabschnitt vorgesehenen ersten Antriebswelle und einer im Wesentlichen im zweiten Hülsenabschnitt vorgesehenen zweiten Antriebswelle.

Ein derartiges Winkelstück ist aus der Patentschrift US 4,278,428 bekannt. Das Winkelstück weist eine einteilige, hohle Griffhülse auf, in der ein Grundkörper aufgenommen ist. Der Grundkörper lagert unter anderem die Antriebswellen mit ihren jeweiligen Lagerhülsen und Lagern und verschiedene Medienleitungen. Die einteilige Griffhülse ist auf den Grundkörper aufgeschoben und mit dem Grundkörper verrastet. Eine einteilige Griffhülse weist im Vergleich zu einer mehrteiligen Griffhülse unter anderem den Vorteil auf, dass keine Kanten oder Schnittstellen vorhanden sind, an denen Verschmutzungen hängen bleiben können oder Verschmutzungen in das Winkelstück eindringen können, dass keine Mittel zum Verbinden der Griffhülsenteile benötigt werden oder dass an den Schnittstellen keine Pflegemittel aus dem Inneren des Winkelstücks austreten kann. Der Aufbau des Winkelstücks aus der Patentschrift US 4,278,428 ist jedoch kompliziert und aufwändig.

Die Patentanmeldung EP 1 709 933 A1 offenbart ein Winkelstück mit einer zweiteiligen Griffhülse, so dass nach der Demontage des hinteren Griffhülsenabschnitts ein vorderer Wellenabschnitt und die Aufnahmehülse, in welcher der vordere Wellenabschnitt gelagert ist, von hinten in den vorderen Griffhülsenabschnitt einbringbar sind.

Die Patentanmeldung EP 0 029 863 A1 offenbart ebenfalls ein Winkelstück mit einer zweiteiligen Griffhülse und einem aus mehreren Wellenabschnitten mit unterschiedlichen Zahnrädern bestehenden Antriebszug. Die Wellenabschnitte sind austauschbar oder relativ zueinander unterschiedlich in dem Winkelstück anordenbar, so dass in dem Winkelstück unterschiedliche Über- oder Untersetzungsverhältnisse realisierbar sind.

Die Offenlegungsschrift DE 10 2011 075 670 A1 offenbart ein Winkelstück mit zwei miteinander gekoppelten, drehbar gelagerten Wellen, wobei im Kopplungsbereich der beiden Wellen innerhalb der Griffhülse ein Dichtelement angeordnet ist.

Der vorliegenden Erfindung liegt daher die Aufgabe zugrunde, ein medizinisches, insbesondere dentales, Winkelstück zu schaffen, das unter Beibehaltung einer einteiligen, hohlen Griffhülse (mit einem ersten Hülsenabschnitt und einem zweiten Hülsenabschnitt, die gebogen oder gewinkelt zueinander angeordnet sind) und der damit verbundenen Vorteile einfacher aufgebaut und kostengünstiger herstellbar ist.

Diese Aufgabe wird gemäß der vorliegenden Erfindung durch ein medizinisches, insbesondere dentales, Winkelstück mit den Merkmalen des Anspruchs 1 gelöst.

Der erste und der zweite Anschlag definieren oder bestimmen somit die Position der Antriebswellen in dem Winkelstück, insbesondere die axiale (bezogen auf die Längsachse(n) des Winkelstücks) Position der Antriebswellen. Die beiden Anschläge bilden insbesondere auch eine Führung für die Antriebswellen und / oder die Lagerhülsen, in denen die Antriebswellen gelagert sind. Im Vergleich zum dem aus dem Stand der Technik bekannten Winkelstück entfällt somit unter Beibehaltung einer einteiligen Griffhülse in vorteilhafter Weise die Notwendigkeit, einen Grundkörper vorzusehen. In anderen Worten ist die einteilige Griffhülse, insbesondere ihre Endbünde oder innere Umfangswand oder das einteilig damit ausgebildete Lagerelement, als tragendes Element oder Lagerungselement, vorzugsweise zusätzlich als Führungselement, für zumindest den Antriebsstrang und / oder die Antriebswellen und / oder deren Lagerhülsen, ausgebildet, und bildet nicht nur eine Umhüllung für den die Antriebswellen und die anderen Bauteile lagernden Grundkörper, wie dies aus dem Stand der Technik bekannt ist. Die Ausbildung der einteiligen Griffhülse als ein die Position der Antriebswellen festlegendes Element und / oder als tragendes Element oder Lagerelement ist vorzugsweise dadurch definiert, dass an zumindest einem Anschlag ein direkter oder unmittelbarer Kontakt mit zumindest einer Lagerhülse, die eine Antriebswelle lagert, insbesondere mit einem an der Lagerhülse vorgesehen Gegenanschlag, vorgesehen ist. Es wird somit durch direkten Kontakt des Gegenanschlags mit dem Anschlag zumindest die Position, insbesondere die axiale Position, zumindest einer Antriebswelle in einem Hülsenabschnitt festlegt.

Die erste Antriebswelle und / oder die erste Lagerhülse und / oder der erste Hülsenabschnitt ist / sind insbesondere dadurch definiert, dass sie näher zur Kopfhülse angeordnet ist / sind als die zweite Antriebswelle und / oder die zweite Lagerhülse und / oder der zweite Hülsenabschnitt.

Der erste und / oder der zweite Anschlag sind vorzugsweise einteilig oder unlösbar mit der Griffhülse ausgebildet. Der erste und / oder der zweite Anschlag und / oder der Gegenanschlag ist / sind zum Beispiel als Schulter, Rücksprung, Vorsprung, Aussparung, Bund oder Stufe ausgebildet. Der erste und / oder der zweite Anschlag ragt zum Beispiel von der inneren Umfangswand der einteiligen Griffhülse in den Innenraum der hohlen, einteiligen Griffhülse. Insbesondere ist zumindest einer der Anschläge kreisbogen- oder ringförmig ausgebildet und / oder erstreckt sich zum Beispiel entlang der inneren Umfangswand der einteiligen Griffhülse, insbesondere mit im Wesentlichen konstantem Radius um eine Mittelachse des ersten oder zweiten Hülsenabschnitts. Insbesondere erstreckt sich der Gegenanschlag kreisbogen- oder ringförmig um die Außenwand der Lagerhülse, insbesondere mit im Wesentlichen konstantem Radius um eine Mittelachse der Lagerhülse. Der Gegenanschlag ist insbesondere einteilig oder unlösbar mit der Lagerhülse verbunden und / oder hergestellt.

Als Winkelstück wird in bekannter Weise ein medizinisches oder dentales Handgriffelement bezeichnet, das eine Griffhülse und eine daran anschließende Kopfhülse aufweist, wobei die Griffhülse gebogen oder gewinkelt ausgebildet ist und somit zwei Hülsenabschnitte aufweist, die gebogen oder gewinkelt zueinander angeordnet sind. Durch die gebogene oder gewinkelte Anordnung der beiden Hülsenabschnitte weist das Winkelstück und / oder die einteilige Griffhülse (im Bereich der Biegung oder Winkelung) eine konkave Oberseite und eine konvexe Unterseite auf. Insbesondere weist der erste Hülsenabschnitt eine erste Mittelachse und der zweite Hülsenabschnitt eine zweite Mittelachse auf, wobei die erste Mittelachse und die zweite Mittelachse einen stumpfen Winkel von etwa 155° - 175° einschließen. Des Weiteren weist die Kopfhülse des Winkelstücks eine Aufnahmeöffnung für ein Werkzeug auf, wobei die Aufnahmeöffnung an jener Seite des Winkelstücks vorgesehen ist, an der sich die konvexe Unterseite des Winkelstücks befindet. An der Kopfhülse ist eine der Aufnahmeöffnung gegenüber liegende Seite vorgesehen, die sich insbesondere an der Seite des Winkelstücks mit der konkaven Oberseite befindet. An dieser der Aufnahmeöffnung gegenüber liegenden Seite der Kopfhülse ist vorzugsweise zumindest ein Teil eine Lösevorrichtung zum Lösen eines Werkzeugs aus der Werkzeughalterung vorgesehen, zum Beispiel ein Taster oder eine Druckkappe.

Die Kopfhülse und / oder die darin aufgenommene Werkzeughalterung weisen eine Längsachse auf (wobei die Längsachse der Werkzeughalterung insbesondere gleich einer Drehachse einer in Drehung versetzbaren Werkzeughalterung ist), die sich von der Seite mit der Aufnahmeöffnung bis zur der Aufnahmeöffnung gegenüber liegenden Seite der Kopfhülse erstreckt. Diese Längsachse schließt mit der ersten Mittelachse des ersten Hülsenabschnitts einen Winkel von etwa 90° ein.

Die einteilige, hohle Griffhülse ist insbesondere rohrförmig und / oder länglich ausgebildet. Die Griffhülse weist ein kopfhülsen-seitiges Ende auf, an dem der kopfhülsen-seitige Endbund und / oder die Kopfhülse vorgesehen ist / sind. Die Kopfhülse ist entweder einteilig mit der Griffhülse ausgebildet und / oder unlösbar mit der Griffhülse verbunden oder sie ist, insbesondere an dem kopfhülsen-seitigen Ende, von der einteiligen Griffhülse trennbar. In letzterem Fall ist vorzugsweise eine lösbare Verbindungsvorrichtung zur Verbindung der Griffhülse mit der Kopfhülse vorgesehen. Das dem kopfhülsen-seitigen Ende gegenüber liegende Ende des Winkelstücks oder der einteiligen Griffhülse ist als anschlussseitiges Ende ausgebildet. Das anschlussseitige Ende ist insbesondere zur Verbindung des Winkelstücks mit einer Antriebsvorrichtung, zum Beispiel einem E-Motor oder einem Luftmotor, und / oder zur Verbindung mit einer Medienquelle, zum Beispiel einer Druckluft- oder Wasserquelle, und / oder zur Verbindung mit einer Steuer- und / oder Regeleinheit vorgesehen. An dem anschlussseitigen Ende ist der anschlussseitige Endbund vorgesehen. Das anschlussseitige Ende umfasst insbesondere eine Öffnung und / oder ein an die Öffnung anschließendes Rohr und / oder eine an die Öffnung anschließende Aufnahme, in die / das ein Anschluss-, Kupplungs- oder Verbindungsteil der Antriebsvorrichtung, der Medienquelle und / oder der Steuer- und / oder Regeleinheit lösbar einfügbar ist. Besonders bevorzugt ist das anschlussseitige Ende als Teil einer Steck- und / oder Drehkupplung ausgebildet.

Im Inneren der Griffhülse sind vorzugsweise neben dem Antriebsstrang, insbesondere den beiden Antriebswellen und deren Lagerhülsen, weitere Bauteile, zum Beispiel eine oder mehrere Medien- oder Fluidleitungen und / oder zumindest ein Lichtleiter und / oder zumindest eine Lichtquelle und / oder zumindest eine elektrische (Signal)leitung und / oder zumindest ein Sensor, angeordnet. Diese Bauteile sind insbesondere in Zwischenräumen zwischen der Griffhülse, insbesondere deren inneren Umfangswand, und dem Antriebsstrang, insbesondere den Lagerhülsen, angeordnet.

Die beiden Antriebswellen sind insbesondere durch zwei Zahnräder miteinander verbunden, wobei jeweils ein Zahnrad an einer Antriebswelle vorgesehen ist. Alternativ sind die beiden Antriebswellen durch ein Getriebe miteinander verbunden, zum Beispiel durch ein Untersetzungs- oder Übersetzungsgetriebe. Vorzugsweise ist an dem kopfhülsen-seitigen Ende der ersten Antriebswelle ein weiteres Zahnrad vorgesehen, welches mit einem mit der Werkzeughalterung verbundenen Zahnrad kämmt. Besonders bevorzugt ist zumindest eine Anschlag dazu vorgesehen, die Position zumindest eines der im Vorstehenden genannten Zahnräder und / oder zumindest eines Teils des Getriebes in der Griffhülse und / oder die Position eines Zahnrades in Bezug auf ein anderes Zahnrad festzulegen.

Die Lagerhülsen sind vorzugsweise als längliche, rohrförmige Hülsen mit einer im Wesentlichen zylindrischen Innenbohrung ausgebildet. Vorzugsweise ist jeder Antriebswelle eine eigene Lagerhülse zugeordnet. Vorzugsweise sind die Wellen drehbar in der jeweiligen Lagerhülse gelagert, insbesondere durch in der Lagerhülse vorgesehene Lager, zum Beispiel durch Wälz- oder Kugellager. Vorzugsweise ist an der Außenseite zumindest einer Lagerhülse zumindest ein Element zum axialen und / oder radialen Lagern und / oder Befestigen an der einteiligen Griffhülse, insbesondere an der inneren Umfangswand der einteiligen Griffhülse oder an dem einteilig damit ausgebildeten Lagerelement, und / oder eine Element zum Halten, Führen, Durchtritt oder Passieren einer Medien- oder Fluidleitung oder eines Lichtleiters vorgesehen. Derartige Elemente können zum Beispiel einen Vorsprung, einen Rücksprung, eine Aufnahme, einen Einstich, eine Nut, eine Schulter, eine Aussparung, einen Anschlag, einen Flansch etc. aufweisen.

Das Spannelement, das durch direkten Kontakt mit einem Anschlag an der inneren Umfangswand der einteiligen Griffhülse oder an dem einteilig damit ausgebildeten Lagerelement die axiale und / oder radiale Position einer Antriebswelle in einem Hülsenabschnitt festlegt, ist zum Beispiel lösbar mit einer Antriebswelle, insbesondere mit einer die Antriebswelle aufnehmenden Lagerhülse, verbindbar. Das Spannelement ist zum Beispiel als Gewindeelement, insbesondere als Schraubenmutter, mit einem Innengewinde ausgebildet, das auf ein Außengewinde einer Lagerhülse aufschraubbar ist.

Die Kopfhülse ist von der Griffhülse lösbar, wobei das Spannelement auch dazu vorgesehen ist, die Kopfhülse mit der Griffhülse zu verspannen. Damit dient das Spannelement in vorteilhafter Weise sowohl zur Festlegung der axialen und / oder radialen Position einer Antriebswelle in der einteiligen Griffhülse und der Verbindung und Befestigung der Kopfhülse mit der Griffhülse, so dass dafür keine eigene Verbindungsvorrichtung notwendig ist. Besonders bevorzugt ist die erste Lagerhülse als Verbindungselement zum Verbinden und Verspannen der Kopfhülse mit der Griffhülse ausgebildet. Insbesondere ist die Kopfhülse mit der Griffhülse durch das Verbinden des Spannelements mit der Lagerhülse oder durch das Aufschrauben des Spannelements auf die Lagerhülse und besonders bevorzugt durch den damit hergestellten direkten Kontakt des Spannelements mit dem Anschlag an der inneren Umfangswand der einteiligen Griffhülse verspannt.

Gemäß einem weiteren vorteilhaften Ausführungsbeispiel ist das Spannelement zusätzlich auch noch dazu vorgesehen, die Antriebswelle (zusätzlich zur Festlegung der Position der Antriebswelle in der Griffhülse) mit der Griffhülse zu verspannen oder die Antriebswelle in der Griffhülse zu fixieren. Besonders bevorzugt ist die axiale Positionierung der ersten Antriebswelle in dem Winkelstück durch den kopfhülsen-seitigen Endbund oder Anschlag und die radiale Positionierung der ersten Antriebswelle in dem Winkelstück, insbesondere zusätzlich das Verbinden und / oder Verspannen der Kopfhülse mit der Griffhülse, durch das Verbinden (Aufschrauben) des Spannelements mit der Lagerhülse und insbesondere durch den damit hergestellten direkten Kontakt des Spannelements mit dem Anschlag an der inneren Umfangswand der einteiligen Griffhülse gebildet.

Gemäß einem Ausführungsbeispiel ist die Kopfhülse lösbar mit der ersten Antriebswelle und / oder der ersten Lagerhülse verbindbar, vorzugsweise mittels einer Verbindungsvorrichtung. Die Verbindungsvorrichtung umfasst zum Beispiel eine Schraub-, Steck- oder Rastvorrichtung an der Kopfhülse, insbesondere an einem hülsenartigen Fortsatz der Kopfhülse, und an der Lagerhülse, insbesondere an einem kopfhülsen-seitigen Ende der Lagerhülse. Vorzugsweise ist an der Kopfhülse, insbesondere an dem hülsenartigen Fortsatz der Kopfhülse, und / oder an der Lagerhülse, insbesondere an dem kopfhülsen-seitige Ende der Lagerhülse, ein Anschlag vorgesehen, welcher insbesondere den kopfhülsen-seitigen Endbund oder Anschlag der Griffhülse kontaktiert, um damit besonders bevorzugt die axiale Position der ersten Antriebswelle in dem Winkelstück festzulegen. Vorzugsweise bewirkt das Verbinden der Kopfhülse mit der ersten Antriebswelle und / oder der ersten Lagerhülse ein Ineinandergreifen des Zahnrads an dem kopfhülsenseitigen Ende der ersten Antriebswelle und des Zahnrads, das mit der Werkzeughalterung verbunden ist. Vorzugsweise bilden die Kopfhülse und die damit verbundene erste Antriebswelle und / oder erste Lagerhülse eine bauliche Einheit, die mit der einteiligen Griffhülse verbindbar ist.

Vorzugsweise weist die Griffhülse an ihrem kopfhülsen-seitigen Ende eine Öffnung auf, durch welche die erste Antriebswelle und / oder die erste Lagerhülse, die insbesondere mit der Kopfhülse verbunden ist / sind und eine bauliche Einheit bilden, in die Griffhülse einfügbar ist / sind. Vorzugsweise ist der hülsenartigen Fortsatz der Kopfhülse durch die Öffnung am kopfhülsen-seitigen Ende der Griffhülse einfügbar und / oder in der hohlen, einteiligen Griffhülse aufnehmbar. Vorzugsweise ist an der Kopfhülse ein Anschlag für das kopfhülsen-seitige Ende oder den kopfhülsen-seitigen Endbund oder Anschlag der einteiligen Griffhülse vorgesehen.

Vorzugsweise weist die Griffhülse an ihrem anschlussseitigen Ende eine Öffnung auf, durch welche das Spannelement, insbesondere das Gewindeelement, vorzugsweise die Schraubenmutter, in die Griffhülse einfügbar ist. Vorzugsweise ist das Spannelement mit der in die hohle Griffhülse eingefügten erste Lagerhülse der ersten Antriebswelle verbindbar, wodurch besonders bevorzugt und wie im Vorstehenden bereits beschrieben, die erste Lagerhülse mit der Kopfhülse in der Griffhülse verspannbar ist. Das Spannelement ist besonders bevorzugt mit der Lagerhülse derart verbindbar, dass es an einem Anschlag an der inneren Umfangswand der Griffhülse, insbesondere des ersten Hülsenabschnitts, anliegt, wodurch, wie ebenfalls im Vorstehenden bereits beschrieben, die Position der ersten Antriebswelle und deren Lagerhülse im ersten Hülsenabschnitt festlegbar ist, die erste Antriebswelle in der einteiligen Griffhülse befestigbar ist und die Kopfhülse mit der einteiligen Griffhülse verspannbar ist. Vorzugsweise ist das Spannelement vollständig innerhalb der inneren Umfangswand der hohlen Griffhülse angeordnet.

Gemäß einem Ausführungsbeispiel erstreckt sich das einteilig mit dem ersten Hülsenabschnitt ausgebildete Lagerelement oder das das einteilig mit dem zweiten Hülsenabschnitt ausgebildete Lagerelement von der inneren Umfangswand der hohlen Griffhülse in den Innenraum der Griffhülse und lagert oder positioniert, vorzugsweise radial, insbesondere zumindest ein im Inneren des Winkelstücks vorgesehenes Bauteil, zum Beispiel eine Lagerhülse einer Antriebswelle, eine Medien- oder Fluidleitung, einen Lichtleiter und / oder einen elektrischen Leiter. Ein derartiges Lagerelement ermöglicht eine zuverlässige Lagerung eines im Winkelstück angeordneten Bauteils. Das einteilig mit der Griffhülse ausgebildete Lagerelement ist zum Beispiel als von der inneren Umfangswand in den Innenraum der einteiligen Griffhülse ragender Fortsatz oder Vorsprung ausgebildet. Alternativ ist das Lagerelement als scheibenförmiges, insbesondere den Innendurchmesser des Innenraums ausfüllendes, Element ausgebildet, das vorzugsweise den Innenraum der einteiligen Griffhülse in zwei Abschnitte unterteilt. Das Lagerelement weist bevorzugt zumindest eine Bohrung auf, in der ein im Inneren des Winkelstücks angeordnetes Bauteil aufnehmbar und / oder lagerbar ist. Besonders bevorzugt umfasst das Lagerelement zumindest zwei Bohrungen mit insbesondere unterschiedlichen Innendurchmessern, insbesondere zur Lagerung unterschiedlicher Bauteile mit unterschiedlichen Außendurchmessern. Das Lagerelement ist zum Beispiel in dem ersten Hülsenabschnitt und / oder anschließend an die Biegung oder Winkelung angeordnet. Wie im Vorstehenden bereits beschrieben, ist an dem Lagerelement ein Anschlag vorgesehen, der die (axiale und / oder radiale) Position einer Antriebswelle in einem Hülsenabschnitt festlegt. Besonders bevorzugt ist zumindest ein Teil des Spannelements, das durch direkten Kontakt mit einem Anschlag die Position einer Antriebswelle in einem Hülsenabschnitt festlegt, in dem Lagerelement oder in einer Bohrung des Lagerelements aufgenommen.

Gemäß einem anderen Ausführungsbeispiel weisen die erste Antriebswelle eine Rotationsachse und der erste Hülsenabschnitt eine erste Mittelachse auf, wobei die Rotationsachse und die erste Mittelachse versetzt zueinander angeordnet sind, insbesondere derart, dass das kopfhülsen-abgewandte Ende der ersten Antriebswelle (und / oder ersten Lagerhülse) näher der durch die gebogene oder gewinkelte Anordnung der beiden Hülsenabschnitte gebildeten konkaven Oberseite der Griffhülse im Bereich der Biegung oder Winkelung als der konvexen Unterseite der Griffhülse im Bereich der Biegung oder Winkelung ist. Bevorzugt schließen die Rotationsachse und die Mittelachse einen Winkel von etwa 2° - 10° ein. Damit wird in vorteilhafter Weise im Winkelstück Platz zur Aufnahme von Bauteilen unterhalb der ersten Antriebswelle geschaffen, zum Beispiel für einen Lichtleiter. Demgemäß ist besonders bevorzugt im Winkelstück einen Lichtleiter zur Übertragung von Licht auf die Behandlungsstelle vorgesehen, wobei der Lichtleiter zumindest im Bereich der Biegung oder Winkelung der Griffhülse näher der konvexen Unterseite der Griffhülse als der konkaven Oberseite der Griffhülse und / oder zwischen der ersten Antriebswelle und der konvexen Unterseite der Griffhülse angeordnet ist. Anstelle des Lichtleiters oder zusätzlich ist es selbstverständlich möglich, andere Bauteile im Bereich der Biegung oder Winkelung der Griffhülse näher der konvexen Unterseite der Griffhülse als der konkaven Oberseite der Griffhülse und / oder zwischen der ersten Antriebswelle und der konvexen Unterseite der Griffhülse anzuordnen, insbesondere zumindest einen elektrischen Leiter, eine Medien- oder eine Fluidleitung. Der Lichtleiter ist zum Beispiel als Glasstab oder Glasfaserstab ausgebildet.

Besonders bevorzugt oder zusätzlich zu der Anordnung des kopfhülsen-abgewandten Endes der ersten Antriebswelle (und / oder ersten Lagerhülse) näher der konkaven Oberseite der Griffhülse im Bereich der Biegung oder Winkelung schließt die Längsachse der Kopfhülse und / oder der darin aufgenommenen Werkzeughalterung mit der Rotationsachse der ersten Antriebswelle einen Winkel größer 90°, insbesondere einen Winkel von 91° - 98°, ein. Insbesondere schließt die Längsachse der Kopfhülse und / oder der darin aufgenommenen Werkzeughalterung mit der ersten Mittelachse des ersten Hülsenabschnitts einen Winkel von etwa 90° ein. Dadurch ist die Außengeometrie und das äußere Erscheinungsbild für den Anwender unverändert, es wurde jedoch, wie im Vorstehenden beschrieben, unterhalb der ersten Antriebswelle Platz geschaffen.

Gemäß einem weiteren Ausführungsbeispiel weist zumindest eine Lagerhülse einer Antriebswelle einen Außenmantel mit einer Innenbohrung auf, wobei die Innenbohrung durch ein Verschlussteil verschlossen ist und wobei in dem Verschlussteil eine Öffnung vorgesehen ist, durch welche eine Antriebswelle ragt. Vorzugsweise ist eine Antriebswelle und / oder eine Zahnrad in der Lagerhülse gelagert und eine andere Antriebswelle und / oder ein anderes Zahnrad ragt durch die Öffnung, so dass insbesondere die beiden Antriebswellen und / oder Zahnräder miteinander verbunden sind oder miteinander kämmen. Vorzugsweise ist die Lagerhülse topfförmig ausgebildet. Vorzugsweise ist der Innendurchmesser der Öffnung geringer als der Innendurchmesser der Innenbohrung der Lagerhülse. Vorzugsweise ist das Verschlussteil einteilig mit der Lagerhülse ausgebildet. Bevorzugt ist die zweite Lagerhülse, welche die zweite Antriebswelle lagert, mit dem Verschlussteil versehen. Bevorzugt ist das Verschlussteil an dem der Kopfhülse zugewandten Ende der Lagerhülse vorgesehen. Bevorzugt ist an der Öffnung des Verschlussteils ein Dichtelement vorgesehen, zum Beispiel ein O-Ring. Besonders bevorzugt ist an der Öffnung des Verschlussteils eine Aufnahme für das Dichtelement vorgesehen, zum Beispiel ein Rücksprung oder eine Nut. Bevorzugt umgibt das Dichtelement die Antriebswelle, die durch die Öffnung des Verschlussteils ragt, und / oder ein an der Antriebswelle vorgesehenes Zahnrad. Bevorzugt ist unmittelbar an die Lagerhülse mit dem Verschlussteil, insbesondere an deren der Kopfhülse zugewandten Ende, und / oder an das Dichtelement angrenzend eine weitere Lagerhülse, insbesondere die erste Lagerhülse, welche die erste Antriebswelle lagert, und / oder ein mit der weiteren Lagerhülse verbundenes Bauteil, insbesondere das Spannelement, das durch direkten Kontakt mit einem Anschlag die Position einer Antriebswelle festlegt, vorgesehen. Bevorzugt ist an dem Spannelement, insbesondere an seinem der Lagerhülse mit dem Verschlussteil zugewandten Ende, eine Aufnahme für das Dichtelement vorgesehen.

Ein Verfahren zur Herstellung eines Winkelstücks umfasst die Schritte, dass die erste Antriebswelle, vorzugsweise mit der ersten Lagerhülse, in das Winkelstück eingefügt wird, wobei der erste Anschlag, insbesondere der kopfhülsen-seitige Endbund oder Anschlag, die Position der ersten Antriebswelle im ersten Hülsenabschnitt festlegt, und dass die zweite Antriebswelle, vorzugsweise mit der zweiten Lagerhülse, in das Winkelstück eingefügt wird, wobei der zweite Anschlag die Position der zweiten Antriebswelle in dem zweiten Hülsenabschnitt festlegt. Vorzugsweise ist oder wird die erste Antriebswelle und / oder die erste Lagerhülse vor dem Einfügen in das Winkelstück mit der Kopfhülse verbunden. Vorzugsweise wird das Spannelement durch die Öffnung an dem anschlussseitigen Ende der einteiligen Griffhülse in die Griffhülse eingefügt. Vorzugsweise wird das Spannelement mit der in die hohle Griffhülse eingefügten erste Lagerhülse der ersten Antriebswelle verbunden, wodurch besonders bevorzugt und wie im Vorstehenden bereits beschrieben, die Kopfhülse mit der Griffhülse verspannt wird. Das Spannelement wird besonders bevorzugt mit der Lagerhülse derart verbunden, dass es an einem ersten Anschlag des ersten Hülsenabschnitts anliegt, wodurch, wie ebenfalls im Vorstehenden bereits beschrieben, die Position der ersten Antriebswelle und deren Lagerhülse im ersten Hülsenabschnitt festgelegt wird, die erste Antriebswelle in der einteiligen Griffhülse befestigt wird und die Kopfhülse mit der einteiligen Griffhülse verspannt wird. Vorzugsweise werden anschließend die zweite Antriebswelle und die zweite Lagerhülse durch die Öffnung an dem anschlussseitigen Ende der einteiligen Griffhülse in die Griffhülse eingefügt.

Abschließend sei darauf hingewiesen, dass die im Folgenden definierten Winkelstücke keine eigenständige erfinderische Aspekte darstellen, da sie nicht zwingend einen ersten Anschlag und einen zweiten Anschlag zur Festlegung der Positionen der ersten und der zweiten Antriebswelle aufweisen:
1. Medizinisches, insbesondere dentales, Winkelstück, umfassend: Eine einteilige, hohle Griffhülse mit einer inneren Umfangswand und mit einem ersten Hülsenabschnitt und einem zweiten Hülsenabschnitt, die gebogen oder gewinkelt zueinander angeordnet sind, eine an die Griffhülse anschließende Kopfhülse, in der eine in Bewegung versetzbare Werkzeughalterung vorgesehen ist, einen Antriebsstrang zum in Bewegung Versetzen der Werkzeughalterung mit einer im Wesentlichen im ersten Hülsenabschnitt vorgesehenen ersten Antriebswelle und einer im Wesentlichen im zweiten Hülsenabschnitt vorgesehenen zweiten Antriebswelle, gekennzeichnet durch ein Lagerelement für zumindest ein im Inneren des Winkelstücks vorgesehenes Bauteil, zum Beispiel für eine Lagerhülse einer Antriebswelle, eine Medienleitung, einen Lichtleiter und / oder einen elektrischen Leiter, wobei das Lagerelement einteilig mit der Griffhülse ausgebildet ist und sich von der inneren Umfangswand der hohlen Griffhülse in den Innenraum der Griffhülse erstreckt. Das Lagerelement kann insbesondere eines oder mehrere der im Vorstehenden in Bezug auf das Lagerelement beschriebenen Merkmale aufweisen. Das Lagerelement ist insbesondere vorgesehen, zumindest ein Bauteil des Winkelstücks, insbesondere eine Antriebswelle, zu lagern und / oder zu positionieren, insbesondere radial zu positionieren.
2. Medizinisches, insbesondere dentales, Winkelstück, umfassend: Eine einteilige, hohle Griffhülse mit einer inneren Umfangswand und mit einem ersten Hülsenabschnitt und einem zweiten Hülsenabschnitt, die gebogen oder gewinkelt zueinander angeordnet sind, eine an die Griffhülse anschließende Kopfhülse, in der eine in Bewegung versetzbare Werkzeughalterung vorgesehen ist, einen Antriebsstrang zum in Bewegung Versetzen der Werkzeughalterung mit einer im Wesentlichen im ersten Hülsenabschnitt vorgesehenen ersten Antriebswelle und einer im Wesentlichen im zweiten Hülsenabschnitt vorgesehenen zweiten Antriebswelle, dadurch gekennzeichnet, dass die erste Antriebswelle eine Rotationsachse und der erste Hülsenabschnitt eine erste Mittelachse aufweisen, wobei die Rotationsachse und die erste Mittelachse versetzt zueinander angeordnet sind, insbesondere derart, dass das kopfhülsen-abgewandte Ende der ersten Antriebswelle näher der durch die gebogene oder gewinkelte Anordnung der beiden Hülsenabschnitte gebildeten konkaven Oberseite der Griffhülse im Bereich der Biegung oder Winkelung als der konvexen Unterseite der Griffhülse im Bereich der Biegung oder Winkelung ist. Vorzugsweise ist ein Lichtleiter zur Übertragung von Licht auf die Behandlungsstelle oder eine Fluidleitung oder eine Medienleitung oder eine elektrischer Leiter vorgesehen, wobei zumindest einer dieser Leiter oder Leitungen im Bereich der Biegung oder Winkelung der Griffhülse näher der konvexen Unterseite der Griffhülse als der konkaven Oberseite der Griffhülse und / oder zwischen der ersten Antriebswelle und der konvexen Unterseite der Griffhülse angeordnet ist. Vorzugsweise weisen die Kopfhülse und / oder die darin aufgenommene Werkzeughalterung eine Längsachse auf, welche mit der Rotationsachse der ersten Antriebswelle einen Winkel größer 90° einschließt. Die Antriebswellen, Hülsen und Achsen und können insbesondere wieder so ausgebildet und / oder zueinander angeordnet sein, wie dies im Vorstehenden bereits beschrieben wurde.
3. Medizinisches, insbesondere dentales, Winkelstück, umfassend: Eine einteilige, hohle Griffhülse mit einer inneren Umfangswand und mit einem ersten Hülsenabschnitt und einem zweiten Hülsenabschnitt, die gebogen oder gewinkelt zueinander angeordnet sind, eine an die Griffhülse anschließende Kopfhülse, in der eine in Bewegung versetzbare Werkzeughalterung vorgesehen ist, einen Antriebsstrang zum in Bewegung Versetzen der Werkzeughalterung mit einer im Wesentlichen im ersten Hülsenabschnitt vorgesehenen ersten Antriebswelle und einer im Wesentlichen im zweiten Hülsenabschnitt vorgesehenen zweiten Antriebswelle, wobei die erste Antriebswelle in einer ersten Lagerhülse und die zweite Antriebswelle in einer zweiten Lagerhülse aufgenommen ist, dadurch gekennzeichnet, dass zumindest eine Lagerhülse einer Antriebswelle einen Außenmantel mit einer Innenbohrung aufweist, wobei die Innenbohrung durch ein Verschlussteil verschlossen ist und wobei in dem Verschlussteil eine Öffnung vorgesehen ist, durch welche eine Antriebswelle ragt. Vorzugsweise ist an der Öffnung des Verschlussteils ein Dichtelement vorgesehen ist. Die Hülsenabschnitte, das Verschlussteil, und das Dichtelement und können insbesondere wieder so ausgebildet und / oder zueinander angeordnet sein, wie dies im Vorstehenden bereits beschrieben wurde.

Die Erfindung wird nachfolgend anhand bevorzugter Ausführungsbeispiele und Bezug nehmend auf die beigefügten Zeichnungen erläutert:
Figur 1 zeigt einen Längsschnitt durch ein Ausführungsbeispiel eines medizinischen, insbesondere dentalen, Winkelstücks mit einer hohlen, einteiligen Griffhülse und einem ersten und zweiten Anschlag zum Festlegen der Position der ersten Antriebswelle und der zweiten Antriebswelle in der Griffhülse.
Figur 2 zeigt im Längsschnitt die hohle, einteilige Griffhülse der Figur 1.
Figur 3 zeigt vom anschlussseitigen Ende des Winkelstücks gesehen ein Ausführungsbeispiel eines einteilig mit der Griffhülse ausgebildeten Lagerelements.
Figur 4 zeigt ein Ausführungsbeispiel einer Lagerhülse einer Antriebswelle mit einem Außenmantel und einer Innenbohrung, wobei die Innenbohrung durch ein Verschlussteil verschlossen ist und wobei in dem Verschlussteil eine Öffnung vorgesehen ist, durch welche eine Antriebswelle ragt.

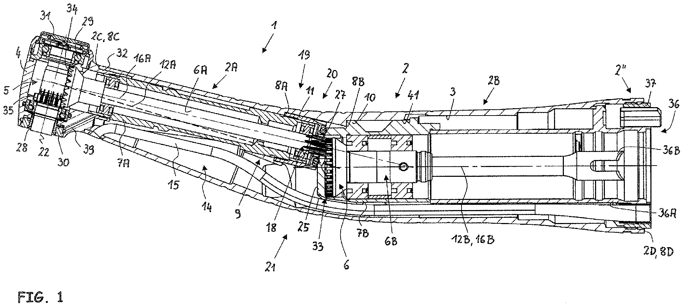

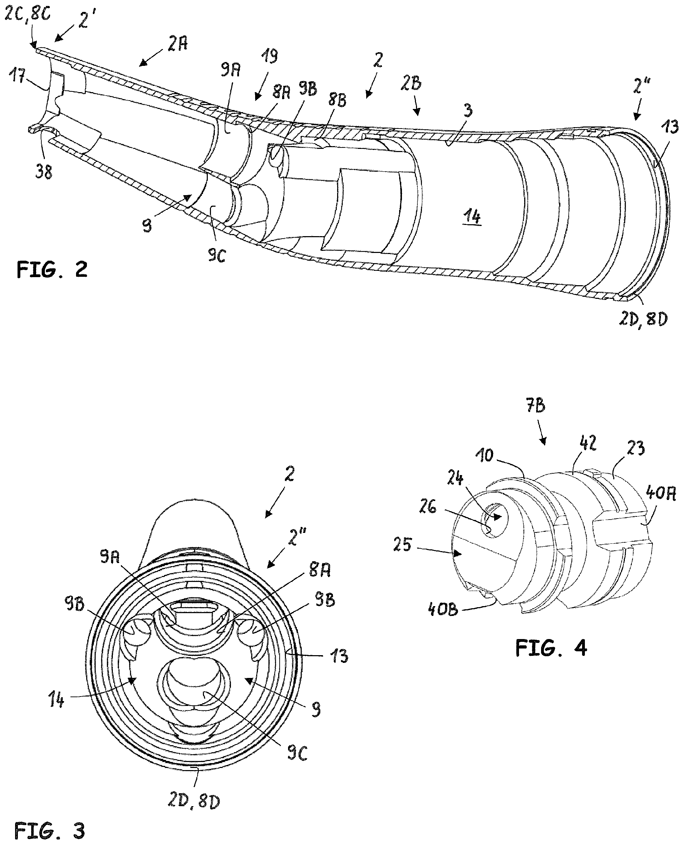

Das in der Figur 1 dargestellte medizinische, insbesondere dentale, Winkelstück 1, umfasst eine einteilige, hohle Griffhülse 2 mit einem kopfhülsen-seitigen Endbund 2C, einem anschlussseitigen Endbund 2D und einer inneren Umfangswand 3, die einen Innenraum 14 der Griffhülse 2 begrenzt. Die einteilige, hohle Griffhülse 2 umfasst einen ersten Hülsenabschnitt 2A und einen zweiten Hülsenabschnitt 2B, die aufgrund einer Biegung oder Winkelung 20 der einteiligen, hohlen Griffhülse 2 gebogen oder gewinkelt zueinander angeordnet sind. Die erste Mittelachse 12A des ersten Hülsenabschnitts 2A und die zweite Mittelachse 12B des zweiten Hülsenabschnitts 2B schließen einen stumpfen Winkel von insbesondere etwa 165°- 170° ein. Die Biegung oder Winkelung 20 befindet sich in etwa in der Mitte der länglichen, einteiligen Griffhülse 2. Aufgrund der Biegung oder Winkelung 20 weist die einteilige Griffhülse 2 (im Bereich der Biegung oder Winkelung 20) eine konkave Oberseite 19 und eine konvexe Unterseite 21 auf. Bevorzugt sind die Bauteile im Inneren der Griffhülse 2 nur durch eine der beiden Öffnungen 13, 17 (siehe Figur 2) an den Enden der einteiligen Griffhülse 2 in diese einfügbar und / oder die Bauteile des Antriebsstrangs 6 des Winkelstücks 1, insbesondere die Antriebswellen 6A, 6B, ein Getriebe 33 und die Lagerhülsen 7A, 7B der Antriebswellen 6A, 6B, sind ausschließlich (direkt oder indirekt) an der inneren Umfangswand 3 der hohlen Griffhülse 2 gelagert und / oder befestigt.

An die einteilige Griffhülse 2, insbesondere an den ersten Hülsenabschnitt 2A, schließt eine Kopfhülse 4 an. In der Kopfhülse 4 ist eine in Bewegung versetzbare, vorzugsweise lösbare, Werkzeughalterung 5 vorgesehen. Die Kopfhülse 4 umfasst des Weiteren zumindest ein Lager 29 zur drehbaren Lagerung der Werkzeughalterung 5, eine Werkzeugaufnahmeöffnung 28 zum Einbringen des Werkzeugs in die Werkzeughalterung 5 und zum Entnehmen daraus, eine Fluidabgabevorrichtung 30 zur Abgabe zumindest eines Fluids auf eine Behandlungsstelle, vorzugsweise um die Werkzeugaufnahmeöffnung 28 angeordnet, und eine Lösevorrichtung zum Lösen eines Werkzeugs aus der Werkzeughalterung 5, die zum Betätigen zum Beispiel einen Taster oder eine Druckkappe 31 aufweist.

Die Kopfhülse 4 ist lösbar mit der einteiligen Griffhülse 2 verbindbar, wobei die Kopfhülse 4 einen hülsenartigen Fortsatz 32 aufweist, der in die Griffhülse 2, insbesondere in den ersten Hülsenabschnitt 2A einfügbar ist.

Die Kopfhülse 4 umfasst des Weiteren eine Längsachse 22, die sich von der konkaven Oberseite 19 des Winkelstücks 1 zu der konvexen Unterseite 21 erstreckt. Diese Längsachse 22 ist ident oder deckungsgleich einer Drehachse der in Drehung versetzbaren Werkzeughalterung 5. Diese Längs- oder Drehachse 22 schließt mit der ersten Mittelachse 12A des ersten Hülsenabschnitts 2A einen Winkel von etwa 90° ein. Die Längs- oder Drehachse 22 schließt des Weiteren mit der Rotationsachse 16A der ersten Antriebswelle 6A einen Winkel größer 90°, insbesondere zwischen 91° - 93° ein. Demgemäß sind die Rotationsachse 16A der ersten Antriebswelle 6A und die erste Mittelachse 12A des ersten Hülsenabschnitts 2A versetzt oder nicht deckungsgleich zueinander angeordnet oder schließen einen spitzen Winkel von etwa 2°-6°, vorzugsweise etwa 4° ein.

Der Antriebsstrang 6 zum in Bewegung Versetzen der Werkzeughalterung 5 umfasst eine im Wesentlichen im ersten Hülsenabschnitt 2A angeordnete erste Antriebswelle 6A und eine im Wesentlichen im zweiten Hülsenabschnitt 2B angeordnete zweite Antriebswelle 6B. Die erste Antriebswelle 6A ist in einer ersten Lagerhülse 7A und die zweite Antriebswelle 6B in einer zweiten Lagerhülse 7B aufgenommen. Die zweite Antriebswelle 6B umfasst vorzugsweise zwei Wellenteile, die relativ zueinander verschiebbar sind. Vorzugsweise umfasst ein Wellenteil eine Mitnehmer 36B einer Kupplungsvorrichtung 36 und das andere Wellenteil das Zahnrad des Getriebes 33. Vorzugsweise ist nur an dem Wellenteil mit dem Zahnrad des Getriebes 33 zumindest eine Wälz- oder Kugellager zur drehbaren Lagerung der gesamten Antriebswelle 6B vorgesehen.

Die beiden Antriebswellen 6A, 6B sind durch ein Getriebe 33 miteinander verbunden. Das Getriebe 33 umfasst zum Beispiel zwei Zahnräder, wobei ein Zahnrad an dem kopfhülsen-abgewandten Ende 18 der ersten Antriebswelle 6A und das zweite Zahnrad an dem kopfhülsen-zugewandten Ende der zweiten Antriebswelle 6B vorgesehen ist. Der Antriebsstrang 6 ist ausgebildet, eine Antriebsbewegung über die beiden Antriebswellen 6A, 6B und das Getriebe 33 auf die Werkzeughalterung 5 zu übertragen. Dazu ist an dem kopfhülsen-zugewandten Ende der ersten Antriebswelle 6A ein weiteres Zahnrad 34 vorgesehen, das mit einem mit der Werkzeughalterung 5 verbundenen Zahnrad oder Ritzel 35 in Eingriff steht. Die Übertragung der Antriebs- oder Rotationsbewegung auf den Antriebsstrang 6 erfolgt an dem anschlussseitigen Ende 2" der Griffhülse 2 über eine dort vorgesehene Kupplungsvorrichtung 36, die unter anderem ein Kupplungsrohr 36A zur Aufnahme eines Anschlussteils einer Antriebseinheit, zum Beispiel eines E-Motors, und einen in dem Kupplungsrohr 36A angeordneten Mitnehmer 36B am Ende der zweiten Antriebswelle 6B umfasst.

Der gebogenen oder gewinkelten Anordnung der beiden Hülsenabschnitte 2A, 2B entsprechend sind jeweils auch die beiden Antriebswellen 6A, 6B und / oder die beiden Lagerhülsen 7A, 7B gewinkelt zueinander angeordnet. Insbesondere schließen ihre Rotations- oder Längsachsen 16A, 16B einen Winkel von etwa 155°- 175°, insbesondere von etwa 160°- 170°ein.

Die Lagerhülsen 7A, 7B sind zur drehbaren Lagerung der Antriebswellen 6A, 6B vorgesehen. Die Lagerhülsen 7A, 7B umfassen insbesondere ein oder mehrere Wälz- oder Kugellager, in welchen die Antriebswellen 6A, 6B drehbar gelagert sind. In oder an den Lagerhülsen 7A, 7B sind Lagerstellen, zum Beispiel in Form von Schulter oder Rücksprüngen, für die Wälz- oder Kugellager vorgesehen. Die zweite Lagerhülse 7B ist vorzugsweise mit dem Kupplungsrohr 36A verbunden. Die zweite Lagerhülse 7B ist vorzugsweise durch das anschlussseitige Ende 2" in die Griffhülse 2 einfügbar.

Das Winkelstück 1 umfasst zumindest einen ersten Anschlag 8A oder 8C, der vorgesehen ist, die Position der ersten Antriebswelle 6A im ersten Hülsenabschnitt 2A festzulegen, und zumindest einen zweiten Anschlag 8B oder 8D, der vorgesehen ist, die Position der zweiten Antriebswelle 6B im zweiten Hülsenabschnitt 2B festzulegen. Der zweite Anschlag 8B ist zum Beispiel an der inneren Umfangswand 3 des zweiten Hülsenabschnitts 2B vorgesehen und vorzugsweise als ring- oder kreisförmige Schulter, die entlang der inneren Umfangswand 3 verläuft, ausgebildet (siehe auch Figur 2). Der zweite Anschlag 8D ist insbesondere an dem anschlussseitigen Endbund 2D vorgesehen und / oder durch diesen gebildet. An der zweiten Lagerhülse 7B oder an einem damit verbindbaren Bauteil 36A ist ein Gegenanschlag 10 vorgesehen (siehe auch Figur 4), welcher durch direkten Kontakt mit einem Anschlag 8B, 8D die Position der zweiten Antriebswelle 6B in dem Hülsenabschnitt 2B festlegt, insbesondere die axiale Position (bezogen auf die Mittelachse 12B) der zweiten Antriebswelle 6B in dem Hülsenabschnitt 2B festlegt. Die zweite Lagerhülse 7B und die zweite Antriebswelle 6B sind somit, insbesondere als bauliche Einheit, axial durch die Öffnung 13 des Winkelstücks 1 in die einteiligen Griffhülse 2 einschiebbar, bis der Gegenanschlag 10 den zweiten Anschlag 8B, 8D kontaktiert. Die Fixierung der zweiten Lagerhülse 7B und der zweiten Antriebswelle 6B in der einteiligen Griffhülse 2 ist durch einen Fixierelement 37, zum Beispiel einen Schraubring, bewirkt. Das Fixierelement 37 ist an dem anschlussseitigen Ende 2" der Griffhülse 2 befestigt, zum Beispiel eingeschraubt, und drückt die zweite Lagerhülse 7B, insbesondere den Gegenanschlag 10, gegen den zweiten Anschlag 8B, 8D.

Die radiale Positionierung oder Lagerung (bezogen auf die Mittelachse 12B) der zweiten Antriebswelle 6B und / oder der zweiten Lagerhülse 7B ist insbesondere durch die innere Umfangswand 3 der Griffhülse 2, insbesondere des zweiten Hülsenabschnitts 2B, gebildet. Dazu ist vorzugsweise an der inneren Umfangswand 3 und / oder an der zweiten Lagerhülse 7B zumindest ein Kontakt- oder Lagerelement 41, 42 (siehe Figur 4) vorgesehen, zum Beispiel ein Vorsprung, eine Schulter, ein Fortsatz, ein Bund, eine Stufe etc.

Vorzugsweise weist zumindest ein Anschlag 8A - 8D eine dem anschlussseitigen Ende 2" der Griffhülse 2 zugewandte Anschlagfläche auf, so dass das den zumindest einen Anschlag 8A- 8D kontaktierende Bauteil, insbesondere der Gegenanschlag 10 oder das Spannelement 11, durch das anschlussseitigen Ende 2" in die Griffhülse 2 einfügbar und insbesondere anschließend mit dem zumindest einen Anschlag 8A - 8D in Kontakt bringbar ist.

Der erste Anschlag 8A ist, wie insbesondere aus der Figur 2 zu erkennen ist, zum Teil aus der inneren Umfangswand 3 des ersten Hülsenabschnitts 2A (insbesondere im Bereich der konkaven Oberseite 19) und zum Teil aus einem einteilig mit dem ersten Hülsenabschnitt 2A ausgebildeten Lagerelement 9 gebildet oder an diesen Teilen vorgesehen. Das im Folgenden noch im Detail beschriebene Lagerelement 9 umfasst eine Aufnahme oder Bohrung 9A zur Aufnahme und / oder Lagerung zumindest eines Teils der ersten Lagerhülse 7A und / oder der ersten Antriebswelle 6A. Vorzugsweise ist der erste Anschlag 8A an dem kopfhülsen-abgewandten Ende des Lagerelements 9, insbesondere der Aufnahme 9A, vorgesehen. Der erste Anschlag 8A ist vorzugsweise als ring- oder kreisförmige Schulter oder Stufe ausgebildet.

Der erste Anschlag 8C ist insbesondere an dem kopfhülsen-seitigen Endbund 2C vorgesehen und / oder durch diesen gebildet. Der erste Anschlag 8C ist vorgesehen, die Position der ersten Antriebswelle 6A in dem Hülsenabschnitt 2A festzulegen, insbesondere die axiale Position (bezogen auf die Mittelachse 12A) der ersten Antriebswelle 6A in dem Hülsenabschnitt 2A festzulegen. Vorzugsweise ist zum Festlegen der Position der ersten Antriebswelle 6A in dem ersten Hülsenabschnitt 2A an der Kopfhülse 4, insbesondere an dem hülsenartigen Fortsatz 32 der Kopfhülse 4, ein Gegenanschlag vorgesehen, der den ersten Anschlag oder kopfhülsenseitigen Anschlag 8C kontaktiert. Vorzugsweise ist die Kopfhülse 4 mit der ersten Antriebswelle 6A und / oder der ersten Lagerhülse 7A verbunden, so dass durch das Einfügen der mit der Kopfhülse 4 verbundenen Antriebswelle 6A und / oder der ersten Lagerhülse 7A in den ersten Hülsenabschnitt 2A (durch die Öffnung 17) die Position der ersten Antriebswelle 6A in dem ersten Hülsenabschnitt 2A festlegbar ist.

An dem ersten Anschlag 8A ist ein Spannelement 11 vorgesehen, das durch direkten Kontakt mit dem Anschlag 8A die Position der ersten Antriebswelle 6A in dem Hülsenabschnitt 2A festlegt, insbesondere zusätzlich oder alternativ zu dem Anschlag 8C. Das Spannelement 11 umfasst insbesondere eine Schraubenmutter mit einem Innengewinde, das auf ein Außengewinde der ersten Lagerhülse 7A aufschraubbar ist. Das Spannelement 11 ist insbesondere so weit auf die erste Lagerhülse 7A aufschraubbar, bis es den ersten Anschlag 8A kontaktiert. Die erste Antriebswelle 6A ist, vorzugsweise gemeinsam mit der ersten Lagerhülse 7A, durch die Öffnung 17 am kopfhülsenseitigen Ende 2' und das Spannelement 11 durch das anschlussseitige Ende 2" in die einteilige Griffhülse 2 einfügbar. Das Spannelement 11 wird dabei insbesondere im Wesentlichen zuerst achsparallel zur zweiten Mittelachse 12B durch den zweiten Hülsenabschnitt 2B bewegt, anschließend im Inneren des Winkelstücks 1 gekippt und dann im Wesentlichen achsparallel zur ersten Mittelachse 12A bewegt und auf die Lagerhülse 7A aufgeschraubt. Demgemäß ist das Winkelstück 1, insbesondere der Innenraum der Griffhülse 2, vorzugsweise derart bemessen, dass das Spannelement 11 im Wesentlichen zuerst achsparallel zur zweiten Mittelachse 12B durch den zweiten Hülsenabschnitt 2B bewegbar ist, im Inneren des Winkelstücks 1 verschwenkbar ist und im Wesentlichen achsparallel zur ersten Mittelachse 12A bewegbar und auf die Lagerhülse 7A aufschraubbar ist. Die erste Lagerhülse 7A und das Spannelement 11 werden anschließend im Inneren der einteiligen Griffhülse 2 miteinander verbunden.

Das Spannelement 11 ist des Weiteren dafür vorgesehen, die von der einteiligen Griffhülse 2 lösbare Kopfhülse 4 mit der Griffhülse 2 zu verspannen. Als Verbindungselement zwischen dem Spannelement 11 und der Kopfhülse 4 ist dazu die erste Lagerhülse 7A vorgesehen, die mit der Kopfhülse 4, vorzugsweise lösbar, verbunden ist. Durch das Verbinden oder Aufschrauben des Spannelements 11 auf die erste Lagerhülse 7A, insbesondere durch den Kontakt zwischen dem ersten Anschlag 8A und dem Spannelement 11, ist die Kopfhülse 4 mit der einteiligen Griffhülse 2, insbesondere mit dem ersten Hülsenabschnitt 2A, verbindbar, positionierbar oder verspannbar. Das Spannelement 11 verspannt oder fixiert damit auch die erste Antriebswelle 6A und / oder die erste Lagerhülse 7A in der einteiligen Griffhülse 2.

Die Anschläge 8A - 8D, vorzugsweise mit dem Gegenanschlag an der Kopfhülse 4 und / oder mit dem Gegenanschlag 10 und / oder mit dem Spannelement 11, legen insbesondere auch die, insbesondere axialen, Positionen der beiden Zahnräder des Getriebes 33 und das Ineinandergreifen der beiden Zahnräder fest.

Vorzugsweise sind weitere Bauteile vorgesehen, die sich in dem Winkelstück 1 oder in dem Innenraum 14 der einteiligen, hohlen Griffhülse 2 erstrecken, zum Beispiel ein Lichtleiter 15 oder zumindest eine Medien- oder Fluidleitung 39 zur Abgabe eines Fluids auf die Behandlungsstelle, die mit der Fluidabgabevorrichtung 30 verbunden ist, oder zumindest ein elektrischer Leiter. Zumindest eines dieser Bauteile, zum Beispiel der Lichtleiter 15 oder die Fluidleitung 39, ist, insbesondere im Bereich der Biegung oder Winkelung 20 der Griffhülse 2, näher der konvexen Unterseite 21 der Griffhülse 2 als der konkaven Oberseite 19 der Griffhülse 2 angeordnet. Alternativ ist zumindest eines dieser Bauteile zwischen der ersten Antriebswelle 6A und / oder der zweiten Antriebswelle 6B und der konvexen Unterseite 21 der Griffhülse 2 angeordnet. Der Lichtleiter 15 erstreckt sich von dem anschlussseitigen Ende 2" bis zu einer Öffnung 38 an dem kopfhülsenseitigen Ende 2' der einteiligen Griffhülse 2. Die Öffnung 38 ist insbesondere an der konvexen Unterseite 21 der Griffhülse 2 vorgesehen. Die Fluidleitung 39 ist vorzugsweise über die Kupplungsvorrichtung 36 mit einer Fluidquelle verbindbar.

Das im Vorstehenden bereits erwähnte, einteilig mit der Griffhülse 2, zum Beispiel dem ersten Hülsenabschnitt 2A, ausgebildete Lagerelement 9 ist insbesondere in den Figuren 2 und 3 gut erkennbar. Das Lagerelement 9 erstreckt sich von der inneren Umfangswand 3 der hohlen Griffhülse 2 in einen Innenraum 14 der Griffhülse 2. Das Lagerelement 9 ist zum Beispiel als im Wesentlichen scheibenförmiges Element mit einer dem kopfhülsen-seitigen Ende 2' zugewandten Seitenfläche, einer dem anschluss-seitigen Ende 2" zugewandten Seitenfläche und einem Außenumfang oder Außenrand ausgebildet. Das Lagerelement 9 ist insbesondere zumindest über einen Teil seines Außenumfangs oder Außenrands mit der inneren Umfangswand 3 einteilig oder unlösbar verbunden.

Das Lagerelement 9 ist insbesondere dazu vorgesehen, zumindest ein im Inneren des Winkelstücks 1 vorgesehenes Bauteil, zum Beispiel eine Antriebswelle 6A, eine Lagerhülse 7A einer Antriebswelle 6A, eine Medien- oder Fluidleitung 39, einen Lichtleiter 15 und / oder einen elektrischen Leiter, zu lagern oder aufzunehmen. Das Lagerelement 9 ist besonders bevorzugt dazu vorgesehen, ein im Inneren des Winkelstücks 1 vorgesehenes Bauteil, radial (in Bezug auf die erste Mittelachse 12A) im Winkelstück 1 zu lagern oder zu fixieren, insbesondere die erste Antriebswelle 6A und / oder die Lagerhülse 7A radial zu lagern oder zu fixieren und somit insbesondere auch einen zuverlässigen Eingriff der Zahnräder des Getriebes 33 zu gewährleisten. Dazu ist am Lagerelement 9 vorzugsweise zumindest eine Aufnahme, Aussparung oder Bohrung 9A, 9B, 9C vorgesehen, in welcher das Bauteil anordenbar, aufnehmbar und / oder lagerbar ist. Bevorzugt ist zumindest eine der Bohrungen 9A, 9B, 9C an ihrem Umfang geschlossen ausgebildet. Gemäß dem Ausführungsbeispiel der Figur 3 ist die Bohrung 9A für die Aufnahme der ersten Antriebswelle 6A und der ersten Lagerhülse 7A und die Bohrung 9C für die Aufnahme des Lichtleiters 15 vorgesehen. Die beiden Bohrungen 9B sind für die Aufnahme von je einer Medien- oder Fluidleitung 39 vorgesehen. Insbesondere ist an dem Lagerelement 9, bevorzugt an der Öffnung 9A zur Aufnahme der ersten Lagerhülse 7A, zumindest ein Teil des ersten Anschlags 8A vorgesehen. Besonders bevorzugt ist zumindest ein Teil des Spannelements 11 in dem Lagerelement 9, bevorzugt in der Öffnung 9A, aufnehmbar. Besonders bevorzugt ist das Lagerelement 9, insbesondere der Anschlag 8A, zum Kontakt mit dem Spannelement 11, ausgebildet.

Die Figur 4 zeigt die zweite Lagerhülse 7B zur Lagerung der zweiten Antriebswelle 6B und insbesondere der an der zweiten Antriebswelle 6B vorgesehenen Teile des Getriebes 33. In der Lagerhülse 7B ist zumindest ein Lagersitz und ein darin angeordnetes Lager zur drehbaren Lagerung der zweiten Antriebswelle 6B vorgesehen. Die zweite Lagerhülse 7B umfasst einen, vorzugsweise im Wesentlichen zylindrischen, Außenmantel 23 mit einer Innenbohrung 24, wobei die Innenbohrung 24 durch ein Verschlussteil 25 verschlossen ist. Das Verschlussteil 25 ist vorzugsweise ein im Wesentlichen scheibenförmiges Element. Das Verschlussteil 25 ist entweder an einem Ende der zweiten Lagerhülse 7B, insbesondere an dem kopfhülsen-seitigen Ende der zweiten Lagerhülse 7B, oder zwischen den beiden Enden der zweiten Lagerhülse 7B, insbesondere in der Innenbohrung 24, angeordnet. Das Verschlussteil 25 ist vorzugsweise als Wandelement an einem Ende der zweiten Lagerhülse 7B ausgebildet, so dass die zweite Lagerhülse 7B insbesondere eine topfförmige Gestalt aufweist.

In dem Verschlussteil 25 ist eine Öffnung 26 vorgesehen, durch welche die erste Antriebswelle 6A ragt (siehe Figur 1), so dass insbesondere die an der ersten Antriebswelle 6A vorgesehenen Teile des Getriebes 33 und die an der zweiten Antriebswelle 6B vorgesehenen Teile des Getriebes 33 einander kontaktieren oder ineinander greifen.

Wie insbesondere aus der Figur 1 zu erkennen ist, ist an der Öffnung 26 des Verschlussteils 25 ein Dichtelement 27, zum Beispiel eine O-Ring, vorgesehen. Das Dichtelement 27 ist in einer Aufnahme, zum Beispiel einer Nut, aufgenommen, die zum Beispiel an der zweiten Lagerhülse 7B, insbesondere an deren kopfhülsen-seitigen Ende und / oder an dem Verschlussteil 25 vorgesehen ist. Alternativ oder zusätzlich ist die Aufnahme für das Dichtelement 27 an der ersten Lagerhülse 7A oder an einem damit verbundenen Bauteil, insbesondere an dem Spannelement 11, vorgesehen. Die erste Lagerhülse 7A oder das Spannelement 11 weist an einem Ende, insbesondere an dem der zweiten Lagehülse 7B zugewandten Ende, eine Öffnung auf, durch welche die erste Antriebswelle 6A ragt. Um diese Öffnung ist die Aufnahme für das Dichtelement 27 und / oder das Dichtelement 27 angeordnet. Das Dichtelement 27 umgibt somit die Öffnung und / oder die erste Antriebswelle 6A in Bezug auf die Achse 16A radial.

Die zweite Lagerhülse 7B mit dem Verschlussteil 25 und das Dichtelement 11 sind Teil eines Schmier- oder Pflegekanals, der zusätzlich auch noch zumindest das Kupplungsrohr 36A oder die erste Lagerhülse 7A umfasst. Der Schmier- oder Pflegekanal ist insbesondere dazu ausgebildet, ein Schmier- oder Pflegemittel zu den beweglichen Teil des Winkelstücks 1 zu fördern, zum Beispiel zu den Wälz- oder Kugellagern, zu den Zahnrädern, zu dem Getriebe 33, zu der Werkzeughalterung 5 und gegebenenfalls zu weiteren in Bewegung versetzbaren Bauteilen. Durch die zweite Lagerhülse 7B mit dem Verschlussteil 25 und durch das Dichtelement 11 ist gewährleistet, dass ein, insbesondere am anschlussseitigen Ende 2" des Winkelstücks 1 eingebrachtes, Schmier- oder Pflegemittel in dem Übergangsbereich zwischen der zweiten Lagerhülse 7B und der ersten Lagerhülse 7A nicht aus dem Schmier- oder Pflegekanal austritt.

An der Außenseite oder dem Außenmantel der zweiten Lagerhülse 7B ist neben dem im Vorstehenden bereits beschriebenen Gegenanschlag 10 vorzugsweise zumindest eine Aufnahme oder ein Rücksprung 40A, 40B zur Passage, Aufnahme oder Lagerung einer Medien- oder Fluidleitung 39 oder eines Lichtleiters 15 vorgesehen. Die Aufnahmen 40A, 40B erstrecken sich axial entlang der Längsachse der zweiten Lagerhülse 7B oder der zweiten Mittelachse 12B. An der Außenseite oder dem Außenmantel der zweiten Lagerhülse 7B sind des Weiteren mehrere die zweite Lagerhülse 7B radial umgebende Vorsprünge 42, Rücksprünge oder Nuten zu erkennen, die zum Beispiel zur Lagerung oder zur radialen Positionierung der zweiten Lagerhülse 7B an der einteiligen Griffhülse 2, insbesondere an ihrer inneren Umfangswand 3, vorgesehen sind.

Das in den Figuren 1 - 4 dargestellte Winkelstück 1 ist somit in Bezug auf die Positionierung und Lagerung der Antriebswellen 6A, 6B besonders bevorzugt dadurch definiert, dass die axiale Position der ersten Antriebswelle 6A in dem ersten Hülsenabschnitt 2A durch den ersten Anschlag 8C, die axiale Position der zweiten Antriebswelle 6B in dem zweiten Hülsenabschnitt 2B durch den zweiten Anschlag 8B und die radiale Lagerung oder Positionierung der ersten Antriebswelle 6A in dem ersten Hülsenabschnitt 2A durch das Lagerelement 9, insbesondere die Bohrung 9A, gebildet ist. Vorzugsweise ist die radiale Lagerung oder Positionierung der zweiten Antriebswelle 6B in dem zweiten Hülsenabschnitt 2B durch zumindest ein Kontakt- oder Lagerelement 41, 42 an der zweiten Lagerhülse 7B oder einem damit verbundenen Bauteil, insbesondere einem hülsenförmigen Bauteil 36A, und / oder an der inneren Umfangswand 3 gebildet.

Die Erfindung ist nicht auf die beschriebenen Ausführungsbeispiele beschränkt, sondern umfasst alle Ausführungen, die durch den Wortlaut der Ansprüche gedeckt sind.

## Patentansprüche

1. Medizinisches, insbesondere dentales, Winkelstück (1), umfassend: Eine einteilige, hohle Griffhülse (2) mit einem kopfhülsen-seitigen Endbund (2C), einem anschlussseitigen Endbund (2D), einer inneren Umfangswand (3) und mit einem ersten Hülsenabschnitt (2A) und einem zweiten Hülsenabschnitt (2B), die gebogen oder gewinkelt zueinander angeordnet sind, eine an die Griffhülse (2) anschließende Kopfhülse (4), in der eine in Bewegung versetzbare Werkzeughalterung (5) vorgesehen ist, einen Antriebsstrang (6) zum in Bewegung Versetzen der Werkzeughalterung (5) mit einer im Wesentlichen im ersten Hülsenabschnitt (2A) vorgesehenen ersten Antriebswelle (6A) und einer im Wesentlichen im zweiten Hülsenabschnitt (2B) vorgesehenen zweiten Antriebswelle (6B), wobei die erste Antriebswelle (6A) in einer ersten Lagerhülse (7A) und die zweite Antriebswelle (6B) in einer zweiten Lagerhülse (7B) aufgenommen ist, einen ersten Anschlag (8A, 8C), der vorgesehen ist, die Position der ersten Antriebswelle (6A) im ersten Hülsenabschnitt (2A) festzulegen, und einen zweiten Anschlag (8B, 8D), der vorgesehen ist, die Position der zweiten Antriebswelle (6B) im zweiten Hülsenabschnitt (2B) festzulegen, wobei der erste Anschlag (8A, 8C) zumindest an einem der folgenden Bauteile des Winkelstücks (1) vorgesehen ist: an dem kopfhülsenseitigen Endbund (2C), an der inneren Umfangswand (3) des ersten Hülsenabschnitts (2A), an einem einteilig mit der Griffhülse (2), insbesondere dem ersten Hülsenabschnitt (2A) oder dem zweiten Hülsenabschnitt (2B), ausgebildeten Lagerelement (9), und wobei der zweite Anschlag (8B, 8D) zumindest an einem der folgenden Bauteile des Winkelstücks (1) vorgesehen ist: an dem anschlussseitigen Endbund (2D), an der inneren Umfangswand (3) des zweiten Hülsenabschnitts (2B), an dem einteilig mit der Griffhülse (2) ausgebildeten Lagerelement (9), wobei das Winkelstück (1) des Weiteren ein Spannelement (11) aufweist, das durch direkten Kontakt mit dem ersten Anschlag (8A) der inneren Umfangswand (3) des ersten Hülsenabschnitts oder an dem einteilig mit der Griffhülse (2) ausgebildeten Lagerelement (9) die Position der ersten Antriebswelle (6A) im ersten Hülsenabschnitt (2A) festlegt, **dadurch gekennzeichnet, dass** die Kopfhülse (4) von der einteiligen Griffhülse (2) lösbar ist, wobei das Spannelement (11) zusätzlich dazu vorgesehen ist, die Kopfhülse (4) mit der Griffhülse (2) zu verspannen.

2. Winkelstück (1) nach Anspruch 1, **dadurch gekennzeichnet, dass**
an zumindest einer Lagerhülse (7B) ein Gegenanschlag (10) vorgesehen ist, welcher durch direkten Kontakt mit einem Anschlag (8B) an der inneren Umfangswand (3) oder an dem Lagerelement (9) die Position einer Antriebswelle (6B) in einem Hülsenabschnitt (2B) festlegt.

3. Winkelstück (1) nach Anspruch 1 oder 2, **dadurch gekennzeichnet, dass**
das Spannelement (11) als Gewindeelement, insbesondere als Schraubenmutter, mit einem Innengewinde ausgebildet ist, das auf ein Außengewinde einer Lagerhülse (7A) aufschraubbar ist.

4. Winkelstück (1) nach einem der vorhergehenden Ansprüche, **dadurch gekennzeichnet, dass**
das Spannelement (11) vorgesehen ist, die erste Antriebswelle (6A) in der Griffhülse (2) zu verspannen oder zu fixieren.

5. Winkelstück (1) nach einem der vorstehenden Ansprüche, **dadurch gekennzeichnet, dass**
die Kopfhülse (4) lösbar mit der ersten Antriebswelle (6A) und / oder der ersten Lagerhülse (7A) verbindbar ist.

6. Winkelstück (1) nach einem der vorstehenden Ansprüche, **dadurch gekennzeichnet, dass**
die Griffhülse (2) an ihrem kopfhülsen-seitigen Ende (2') eine Öffnung (17) aufweist, durch welche die erste Antriebswelle (6A) und / oder die erste Lagerhülse (7A), die insbesondere mit der Kopfhülse (4) verbunden ist / sind, in die Griffhülse (2) einfügbar ist / sind.

7. Winkelstück (1) nach einem der Ansprüche 1 - 6, **dadurch gekennzeichnet, dass**
die Griffhülse (2) an ihrem anschlussseitigen Ende (2") eine Öffnung (13) aufweist, durch welche das Spannelement (11) in die Griffhülse (2) einfügbar ist.

8. Winkelstück (1) nach einem der Ansprüche 1 - 7, **dadurch gekennzeichnet, dass** das Spannelement (11) vollständig innerhalb der inneren Umfangswand (3) der hohlen Griffhülse (2) angeordnet ist.

9. Winkelstück (1) nach einem der vorstehenden Ansprüche, **dadurch gekennzeichnet, dass**
das einteilig mit der Griffhülse (2) ausgebildete Lagerelement (9) sich von der inneren Umfangswand (3) der hohlen Griffhülse (2) in einen Innenraum (14) der Griffhülse (2) erstreckt und insbesondere zumindest ein im Inneren des Winkelstücks (1) vorgesehenes Bauteil, zum Beispiel eine Lagerhülse (7A) einer Antriebswelle (6A), eine Medienleitung (39), einen Lichtleiter (15) und / oder einen elektrischen Leiter, lagert.

10. Winkelstück (1) nach einem der vorstehenden Ansprüche, **dadurch gekennzeichnet, dass**
die erste Antriebswelle (6A) eine Rotationsachse (16A) und der erste Hülsenabschnitt (2A) eine erste Mittelachse (12A) aufweisen, wobei die Rotationsachse (16A) und die erste Mittelachse (12A) versetzt zueinander angeordnet sind, insbesondere derart, dass das kopfhülsen-abgewandte Ende (18) der ersten Antriebswelle (6A) näher der durch die gebogene oder gewinkelte Anordnung der beiden Hülsenabschnitte (2A, 2B) gebildeten konkaven Oberseite (19) der Griffhülse (2) im Bereich der Biegung oder Winkelung (20) als der konvexen Unterseite (21) der Griffhülse (2) im Bereich der Biegung oder Winkelung (20) ist.

11. Winkelstück (1) nach Anspruch 10, **gekennzeichnet durch**
einen Lichtleiter (15) zur Übertragung von Licht auf die Behandlungsstelle und / oder zumindest eine Fluidleitung (39) zur Abgabe eines Fluids auf die Behandlungsstelle und / oder zumindest ein elektrischer Leiter, wobei zumindest eine dieser Leitungen (15, 39) oder Leiter im Bereich der Biegung oder Winkelung (20) der Griffhülse (2) näher der konvexen Unterseite (21) der Griffhülse (2) als der konkaven Oberseite (19) der Griffhülse (2) und / oder zwischen der ersten Antriebswelle (6A) und der konvexen Unterseite (21) der Griffhülse (2) angeordnet ist.

12. Winkelstück (1) nach Anspruch 10 oder 11, **dadurch gekennzeichnet, dass**
die Kopfhülse (4) und / oder die darin aufgenommene Werkzeughalterung (5) eine Längsachse (22) aufweisen, welche mit der Rotationsachse (16A) der ersten Antriebswelle (6A) einen Winkel größer 90° einschließt.

13. Winkelstück (1) nach einem der vorstehenden Ansprüche, **dadurch gekennzeichnet, dass**
zumindest eine Lagerhülse (7B) einer Antriebswelle (6B) einen Außenmantel (23) mit einer Innenbohrung (24) aufweist, wobei die Innenbohrung (24) durch ein Verschlussteil (25) verschlossen ist und wobei in dem Verschlussteil (25) eine Öffnung (26) vorgesehen ist, durch welche eine Antriebswelle (6A) ragt.

14. Winkelstück (1) nach Anspruch 13, **dadurch gekennzeichnet, dass**
an der Öffnung (26) des Verschlussteils (25) ein Dichtelement (27) vorgesehen ist.

## Claims

1. A medical, in particular dental, contra-angle handpiece (1), comprising: a one-piece hollow gripping sleeve (2) having an end collar (2C) on its end facing the head sleeve, an end collar (2D) on the connecting end, an internal peripheral wall (3) and having a first sleeve section (2A) and a second sleeve section (2B), which are disposed so that they are bent or angled relative to one another, a head sleeve (4) adjacent to the gripping sleeve (2), in which a tool holder (5) that can be set in motion is provided, a drive train (6) for setting the tool holder (5) in motion, having a first drive shaft (6A), which is provided essentially in the first sleeve section (2A) and a second drive shaft (6B) which is provided essentially in the second sleeve section (2B), wherein the first drive shaft (6A) is accommodated in a first bearing sleeve (7A), and the second drive shaft (6B) is accommodated in a second bearing sleeve (7B), a first stop (8A, 8C) which is provided to define the position of the first drive shaft (6A) in the first sleeve section (2A), and a second stop (8B, 8D) which is provided to define the position of the second drive shaft (6B) in the second sleeve section (2B), wherein the first stop (8A, 8C) is provided on at least one of the following parts of the contra-angle handpiece (1): on the end collar (2C) which is on the end facing the head sleeve, on the inner peripheral wall (3) of the first sleeve section (2A), on a bearing element (9) which is designed in one piece with the gripping sleeve (2), in particular the first sleeve section (2A) or the second sleeve section (2B), and wherein the second stop (8B, 8D) is provided on at least one of the following parts of the contra-angle handpiece (1): on the end collar (2D) on the connecting end, on the inner peripheral wall (3) of the second sleeve section (2B), on the bearing element (9) which is designed in one piece with the gripping sleeve (2), wherein the contra-angle handpiece (1) additionally comprises a tension element (11) which defines the position of the first drive shaft (6A) in the first sleeve section (2A) by direct contact with the first stop (8A) of the inner peripheral wall (3) of the first sleeve section (2A) or on the bearing element (9) which is designed in one piece with the gripping sleeve (2), **characterized in that**
the head sleeve (4) is releasable from the one piece gripping sleeve (2), wherein the tension element (11) is additionally provided to brace the head sleeve (4) with the gripping sleeve (2).

2. The contra-angle handpiece (1) according to claim 1, **characterized in that** a counter-stop (10) is provided on at least one bearing sleeve (7B) which defines the position of a drive shaft (6B) in a sleeve section (2B) by direct contact with a stop (8B) on the inner peripheral wall (3) or on the bearing element (9).

3. The contra-angle handpiece (1) according to claim 1 or 2, **characterized in that**
the tension element (11) is designed as a threaded element having an inside thread, in particular as a screw nut, which can be screwed onto an outside thread of a bearing sleeve (7A).

4. The contra-angle handpiece (1) according to any one of the preceding claims, **characterized in that**
the tension element (11) is provided to brace or fix the first drive shaft (6A) in the gripping sleeve (2).

5. The contra-angle handpiece (1) according to any one of the preceding claims, **characterized in that**
the head sleeve (4) is releasably connectable to the first drive shaft (6A) and/or to the first bearing sleeve (7A).

6. The contra-angle handpiece (1) according to any one of the preceding claims, **characterized in that**
the gripping sleeve (2) comprises an opening (17) on its end facing the head sleeve (2'), through which the first drive shaft (6A) and/or the first bearing sleeve (7A), which is/are connected to the head sleeve (4) in particular, is/can be inserted into the gripping sleeve (2).

7. The contra-angle handpiece (1) according to any one of claims 1 - 6, **characterized in that**
the gripping sleeve (2) comprises an opening (13) on its connection end (2") through which the tension element (11) can be inserted into the gripping sleeve (2).

8. The contra-angle handpiece (1) according to any one of claims 1 - 7, **characterized in that**
the tension element (11) is disposed completely inside the inner peripheral wall (3) of the hollow gripping sleeve (2).

9. The contra-angle handpiece (1) according to any one of the preceding claims, **characterized in that**
the bearing element (9) which is designed in one piece with the gripping sleeve (2) extends from the inner peripheral wall (3) of the hollow gripping sleeve (2) into an interior space (14) of the gripping sleeve (2), and that it supports in particular at least one element which is provided in the interior of the contra-angle handpiece (1) for example, a bearing sleeve (7A) of a drive shaft (6A), a media line (39), a light guide (15) and/or an electrical conductor.

10. The contra-angle handpiece (1) according to any one of the preceding claims, **characterized in that**
the first drive shaft (6A) has an axis of rotation (16A) and the first sleeve section (2A) has a first central axis (12A), wherein the axis of rotation (16A) and the first central axis (12A) are disposed so that they are offset relative to one another, in particular in such a way that the end (18) of the first drive shaft (6A) facing away from the head sleeve is closer to the concave upper side (19) of the gripping sleeve (2) formed by the curved or angled arrangement of the two sleeve sections (2A, 2B) in the region of the bend or angle (20) than to the convex lower side (21) of the gripping sleeve (2) in the area of the bend or the angle (20).

11. The contra-angle handpiece (1) according to claim 10, **characterized by**
a light guide (15) for transmitting light onto the treatment site and/or at least one fluid line (39) for dispensing a fluid onto the treatment site and/or at least one electrical conductor, wherein at least one of these lines (15, 39) or conductors in the area of the bend or the angle (20) in the gripping sleeve (2) is disposed closer to the convex lower side (21) of the gripping sleeve (2) than the concave upper side (19) of the gripping sleeve (2) and/or is disposed between the first drive shaft (6A) and the convex lower side (21) of the gripping sleeve (2).

12. The contra-angle handpiece (1) according to claim 10 or 11, **characterized in that**
the head sleeve (4) and/or the tool holder (5) accommodated therein comprise(s) a longitudinal axis (22), which forms an angle larger than 90° with the axis of rotation (16A) of the first drive shaft (6A).

13. The contra-angle handpiece (1) according to any one of the preceding claims, **characterized in that**
at least one bearing sleeve (7B) of a drive shaft (6B) has an outer jacket (23) with an inner bore (24), wherein the inner bore (24) is closed by a closure part (25) and wherein an opening (26) is provided in the closure part (25), through which a drive shaft (6A) protrudes.

14. The contra-angle handpiece (1) according to claim 13, **characterized in that**
a sealing element (27) is provided at the opening (26) of the closure part (25).

## Revendications

1. Pièce coudée (1) médicale, en particulier dentaire, comprenant: un manchon de poignée creux (2) d'une seule pièce avec un collier d'extrémité (2C) du côté de manchon de tête, un collier d'extrémité (2D) du côté de raccordement, une paroi périphérique interne (3) et avec une première partie de manchon (2A) et une deuxième partie de manchon (2B) disposées de manière pliées ou en angle l'une par rapport à l'autre, un manchon de tête (4), en jonction avec le manchon de poignée (2), dans lequel un porte-outil (5) pouvant être mis en mouvement est prévu, une chaîne cinématique (6) pour la mise en mouvement du porte-outil (5) avec un premier arbre d'entraînement (6A) essentiellement prévu dans la première partie de manchon (2A) et un deuxième arbre d'entraînement (6B) essentiellement prévu dans la deuxième partie de manchon (2B), dans laquelle le premier arbre d'entraînement (6A) est logé dans un premier manchon de palier (7A) et le deuxième arbre d'entraînement (6B) étant logé dans un deuxième manchon de palier (7B), une première butée (8A, 8C) qui est prévue pour définir la position du premier arbre d'entraînement (6A) dans la première partie de manchon (2A) et une deuxième butée (8B, 8D) qui est prévue pour définir la position du deuxième arbre d'entraînement (6B) dans la deuxième partie de manchon (2B), dans laquelle la première butée (8A, 8C) est prévue au moins au niveau de l'un des composants suivants de la pièce coudée (1): sur le collier d'extrémité (2C) du côté de manchon de tête, sur la paroi périphérique interne (3) de la première partie de manchon (2A), sur un élément de palier (9) formé d'une seule pièce avec le manchon de poignée (2), en particulier la première partie de manchon (2A) ou la deuxième partie de manchon (2B), et dans laquelle la deuxième butée (8B, 8D) est prévue sur au moins l'un des composants suivants de la pièce coudée (1): sur le collier d'extrémité (2D) du côté de raccordement, sur la paroi périphérique interne (3) de la deuxième partie de manchon (2B), sur l'élément de palier (9) formé d'une seule pièce avec le manchon de poignée (2), dans laquelle la pièce coudée (1) présente en outre un élément de serrage (11) lequel, grâce à un contact direct avec la première butée (8A) de la paroi périphérique interne (3) de la première partie de manchon (2A) ou l'élément de palier (9) réalisé d'une seule pièce avec le manchon de poignée (2), définie la position du premier arbre d'entraînement (6A) dans une partie de manchon (2A), **caractérisée en ce que** le manchon de tête (4) peut être détaché du manchon de poignée d'une seule pièce (2), dans laquelle l'élément de serrage (11) est additionnellement prévu pour le serrage du manchon de tête (4) avec le manchon de poignée (2).

2. Pièce coudée (1) selon la revendication 1, **caractérisée en ce que**
l'on prévoit une contre-butée (10) sur au moins un manchon de palier (7B) laquelle, grâce au contact direct avec une butée (8B) sur la paroi périphérique interne (3) ou sur l'élément de palier (9), définie la position d'un arbre d'entraînement (6B) dans une partie de manchon (2B).

3. Pièce coudée (1) selon la revendication 1 ou 2, **caractérisée en ce que**
l'élément de serrage (11) est réalisé en tant qu'élément fileté, en particulier en tant qu'écrou, avec un filetage intérieur pouvant être vissé sur un filetage extérieur d'un manchon de palier (7A).

4. Pièce coudée (1) selon l'une des revendications précédentes, **caractérisée en ce que**
l'élément de serrage (11) est prévu pour serrer ou fixer le premier arbre d'entraînement (6A) dans le manchon de poignée (2).

5. Pièce coudée (1) selon l'une des revendications précédentes, **caractérisée en ce que**
le manchon de tête (4) peut être relié de façon détachable au premier arbre d'entraînement (6A) et/ou au premier manchon de palier (7A).

6. Pièce coudée (1) selon l'une des revendications précédentes, **caractérisée en ce que**
le manchon de poignée (2) présente une ouverture (17) sur son extrémité côté manchon de tête (2') à travers laquelle le premier arbre d'entraînement (6A) et/ou le premier manchon de palier (7A), qui est/sont en particulier relié(s) au manchon de tête (4), peut/peuvent être inséré(s) dans le manchon de poignée (2).

7. Pièce coudée (1) selon l'une des revendications 1 - 6, **caractérisée en ce que**
le manchon de poignée (2) présente une ouverture (13) sur son extrémité du côté de raccordement (2"), à travers laquelle l'élément de serrage (11) peut être inséré dans le manchon de poignée (2).

8. Pièce coudée (1) selon l'une des revendications 1 - 7, **caractérisée en ce que**
l'élément de serrage (11) est complètement disposé à l'intérieur de la paroi périphérique interne (3) du manchon de poignée creux (2).

9. Pièce coudée (1) selon l'une des revendications précédentes, **caractérisée en ce que**
l'élément de palier (9) réalisé d'une seule pièce avec le manchon de poignée (2) s'étend depuis la paroi périphérique interne (3) du manchon de poignée creux (2) dans un espace intérieur (14) du manchon de poignée (2) et loge en particulier au moins un composant prévu à l'intérieur de la pièce coudée (1), par exemple un manchon de palier (7A) d'un arbre d'entraînement (6A), une conduite de milieu (39), un conducteur optique (15) et/ou un conducteur électrique.

10. Pièce coudée (1) selon l'une des revendications précédentes, **caractérisée en ce que**
le premier arbre d'entraînement (6A) présente un axe de rotation (16A) et la première partie de manchon (2A) présentant un premier axe du milieu (12A), dans laquelle l'axe de rotation (16A) et le premier axe du milieu (12A) sont disposés de manière décalée l'un par rapport à l'autre, en particulier de manière à ce que l'extrémité (18) tournant le dos au manchon de tête du premier arbre d'entraînement (6A) soit plus proche du côté supérieur concave (19), formé par l'agencement plié ou angulaire des deux parties de manchon (2A, 2B), du manchon de poignée (2) dans la zone de la pliure ou de l'angulation (20) que du côté inférieur convexe (21) du manchon de poignée (2) dans la zone de la pliure ou de l'angulation (20).

11. Pièce coudée (1) selon la revendication 10, **caractérisée par**
un conducteur optique (15) pour la transmission de lumière vers l'emplacement de traitement et/ou au moins une conduite de fluide (39) pour l'émission d'un fluide sur l'emplacement de traitement et/ou au moins un conducteur électrique, dans laquelle, dans la zone de la pliure ou de l'angulation (20) du manchon de poignée (2), au moins l'un/une de ces conducteurs/conduite (15, 39) est disposé(e) plus près du côté inférieur convexe (21) du manchon de poignée (2) que du côté supérieur concave (19) du manchon de poignée (2) et/ou entre le premier arbre d'entraînement (6A) et le côté inférieur convexe (21) du manchon de poignée (2).

12. Pièce coudée (1) selon la revendication 10 ou 11, **caractérisée en ce que**
le manchon de tête (4) et/ou le porte-outil (5) réceptionné dans celui-ci présentent un axe longitudinal (22) qui forme, avec l'axe de rotation (16A) du premier arbre d'entraînement (6A), un angle supérieur à 90°.

13. Pièce coudée (1) selon l'une des revendications précédentes, **caractérisée en ce qu'**au moins un manchon de palier (7B) d'un arbre d'entraînement (6B) présente une enveloppe externe (23) avec un alésage intérieur (24), dans laquelle l'alésage intérieur (24) est fermé par une pièce de fermeture (25) et dans laquelle une ouverture (26) est prévue dans la pièce de fermeture (25) à travers laquelle passe un arbre d'entraînement (6A).

14. Pièce coudée (1) selon la revendication 13, **caractérisée en ce qu'**un élément d'étanchéité (27) est prévu au niveau de l'ouverture (26) de la pièce de fermeture (25).
